# EUROPEAN PATENT APPLICATION

(11) **EP 1 591 373 A1**
(43) Date of publication of application: **02.11.2005**
(21) Application number: 03780742.7
(22) Date of filing: 12.12.2003
(51) Int. Cl.: B65D 65/40, B65D 81/30, B32B 27/20

(54) **PACKAGING MATERIAL**

(30) Priority: 13.12.2002 JP 2002362671
(71) Applicant: Hosokawa Yoko Co., Ltd., Tokyo-to 102-0084 (JP)
(72) Inventor: Suzuki, Satoshi, Chiyoda-ku, Tokyo 102-0084 (JP); Maruyama, Takanori, Chiyoda-ku, Tokyo 102-0084 (JP); Sugama, Tamotsu, Chiyoda-ku, Tokyo 102-0084 (JP)
(74) Representative: Grünecker, Kinkeldey, Stockmair & Schwanhäusser Anwaltssozietät
(86) International application number: PCT/JP2003/015994
(87) International publication number: WO 2004/054893

(57) **Abstract**

The present invention provides a packaging material comprising a laminate having at least a sealant layer 30 laminated on a substrate film layer 10 via an adhesive layer, **characterized in that** the adhesive layer contains a colorant. The packaging material can be produced in relatively simple production steps at a low cost without using a metal film such as aluminum foil, and exhibits sufficient shading properties.

## Description

### Technical Field

The present invention relates to a packaging material. More particularly, the present invention relates to a packaging material that can be produced at a low cost, has no problem when wasted and allows a detector for inspecting inclusion of a metal foreign matter to be used therefor due to non-inclusion of aluminum foil or the like, and exhibits sufficient shading properties and opacifying properties.

### Background Art

Various packaging materials have been conventionally proposed and used for retort pouch foods represented by various cooked general foods, baby foods, and the like; drinks such as juices and soft drinks; fat-containing foods such as snacks and chocolates; detergents and toiletries for home use such as liquid detergents for home use, softeners for home use, shampoos, and conditioners; pharmaceutical products such as various pharmaceutical solutions and pharmaceutical agents; etc. Many of the above-described products used as a content are denatured or deteriorate by the influence of light, and it is not preferable for some of these products to be visible from the outside because of their product characteristics and the like. In these cases, a packaging material exhibiting excellent shading properties and opacifying properties is desired.

As such a packaging material exhibiting excellent shading properties and opacifying properties, a packaging material with a laminate containing aluminum foil has conventionally been known. However, such a packaging material is not preferable from the viewpoint of environmental protection since it is difficult to separate the aluminum foil from films forming other layers when wasted, and is expensive.

A packaging material with a laminate configuration having an aluminum oxide-deposited film has been developed to replace such a packaging material with a laminate configuration having aluminum foil.

Since the packaging material using an aluminum oxide-deposited film contains a very small amount of deposited aluminum, the problem occurring when wasted is not serious than in the packaging material using aluminum foil. However, the packaging material does not exhibit sufficient shading properties and opacifying properties, and exhibits other properties such as gas barrier properties not largely inferior to those of the packaging material using aluminum foil.

In order to obtain shading properties, a packaging material in which a colored printing ink layer is formed in the laminated structure has also been proposed.

For example, JP-H10-305513A proposes a shading laminated material comprising a laminate material in which at least a substrate film layer and a sealant layer are laminated, characterized in that a continuous printing film of printing ink is formed on any one layer composing the laminate material. JP-H08-53165A proposes a packaging container for a liquid formed by a sheet-like product comprising a resin sheet layer, a colored layer formed on the outer surface of the resin sheet layer, and a surface-covering layer formed on the outer surface of the colored layer, with the surface-covering layer disposed on the surface of the container, characterized in that the colored layer has a gray ink layer.

JP-H09-314719A proposes a shading packaging material characterized in that at least a white first printing layer and a brown or silver second printing layer are formed on one surface of a plastic film, and a sealant layer is formed thereon via a colored resin layer.

JP-H11-34205A proposes a packaging material having a shading layer with a total light transmittance of 30% or less formed by a white first printing layer and a second printing layer with a highly shading color, a colored resin layer, or a combination of the printing layers with the colored resin layer.

JP-H11-277667A, JP-2000-280394A, and JP-2002-19795A disclose a shading packaging material characterized in that a gas barriering transparent film composed of a film having a thin film of a metal compound such as a metal oxide, a printing ink layer, a heat-sealed resin layer are laminated in this order.

However, when a printing ink layer is formed in the laminate configuration in this manner, sufficient shading properties cannot be obtained by forming a single printing ink layer, and several printing ink layers with different colors must be superimposed. This makes the production steps complicated and the product expensive. Further, JP-H09-314719A and JP-H11-34205A as described above disclose forming a colored resin layer instead of a plurality of printing ink layers. However, also in this case, since one new resin layer must be formed to provide a packaging material with shading properties, the same problem of production steps and price of the product occurs.

### Disclosure of the Invention

Accordingly, an object of the present invention is to provide a novel packaging material in which the above-described problems in the prior art are solved. In particular, an object of the present invention is to provide a packaging material that can be produced in relatively simple production steps at a low cost without using a metal film such as aluminum foil, and exhibits sufficient shading properties.

The present invention in which the above problems are solved provides a packaging material comprising a laminate having at least a sealant layer laminated on a substrate film layer via an adhesive layer, being characterized in that the adhesive layer contains a colorant.

According to the present invention, the packaging material is provided with shading properties and opacifying properties required for a packaging material by adding a colorant to the adhesive layer. The number of layers can be reduced as compared with the case in which a colored resin layer or ink printing layer is separately formed in a laminate in order to provide a packaging material with these properties, and simplification of the production steps and reductionintheproductpricecanbeachieved. Further, the adhesive strength is substantially not adversely affected by addition of a colorant to the adhesive layer, so that the packaging material can be suitably used.

The present invention also provides the packaging material as described above, wherein the laminate further has a white coating layer between the substrate film and the sealant layer.

The present invention further provides the packaging material as described above, wherein the adhesive layer containing a colorant is formed in contact with the white coating layer.

The present invention still further provides the packaging material as described above, wherein the laminate further has a deposited layer between the substrate film and the sealant layer.

The present invention yet further provides the packaging material as described above, wherein the laminate further has an intermediate layer between the substrate film and the sealant layer.

The present invention also provides the packaging material as described above, wherein the white coating layer has a weight of 8 to 15 g/m².

The present invention further provides the packaging material as described above, wherein the deposited layer is an aluminum oxide-deposited or silicon oxide-deposited plastic film. In particular, the present invention provides the packaging material as described above, being characterized in that the deposited layer is an aluminum oxide-deposited or silicon oxide-deposited polyethylene terephthalate film.

The present invention still further provides the packaging material as described above, wherein a white coating layer, the adhesive layer containing a colorant, an deposited layer composed of an aluminum-deposited polyethylene terephthalate film, an adhesive layer, an intermediate layer composed of an oriented polyamide film, an adhesive layer, and the sealant layer composed of a cast polypropylene film are laminated on the substrate film layer composed of polyethylene terephthalate in this order.

### Brief Description of the Drawings

Fig. 1 is a sectional view schematically showing the structure in an embodiment of the packaging material of the present invention;
Fig. 2 is a sectional view schematically showing the structure in another embodiment of the packaging material of the present invention;
Fig. 3 is a sectional view schematically showing the structure in still another embodiment of the packaging material of the present invention;
Fig. 4 is a sectional view schematically showing the structure in yet another embodiment of the packaging material of the present invention; and
Fig. 5 is a sectional view schematically showing the structure in a further embodiment of the packaging material of the present invention.

### Best Mode for Carrying Out The Invention

The present invention will now be described with reference to the specific embodiments. However, the present invention should not be limited to these disclosed embodiments.

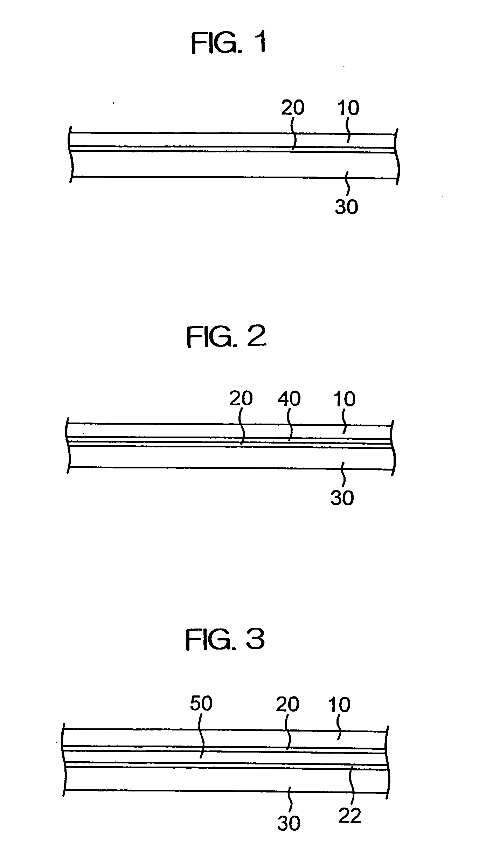

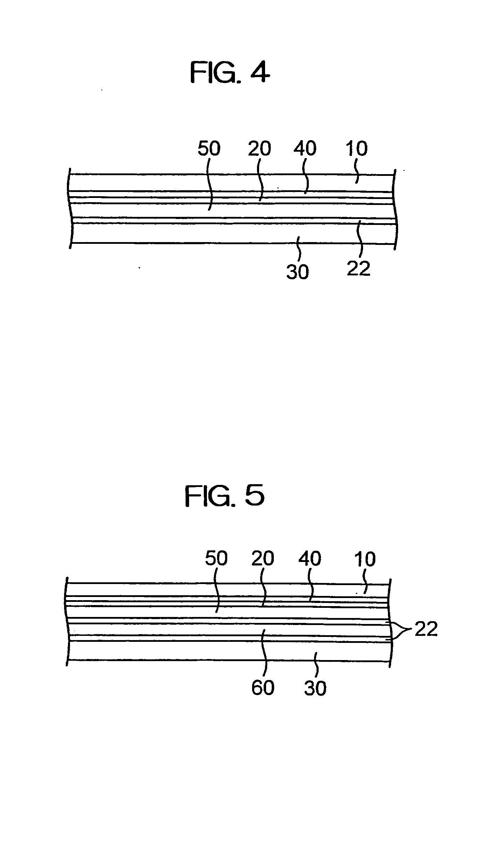

Fig. 1 is a sectional view schematically showing the structure in a first embodiment of the packaging material of the present invention; Fig. 2 is a sectional view schematically showing the structure in a second embodiment of the packaging material of the present invention; Fig. 3 is a sectional view schematically showing the structure in a third embodiment of the packaging material of the present invention; Fig. 4 is a sectional view schematically showing the structure in a fourth embodiment of the packagingmaterial of the present invention; and Fig. 5 is a sectional view schematically showing the structure in a fifth embodiment of the packaging material of the present invention.

As shown in the embodiments shown in Figs. 1 to 5, the packaging material of the present invention comprises a laminate having at least a sealant layer 30 laminated on a substrate film layer 10 via an adhesive layer 20, being characterized in that the adhesive layer 20 contains a colorant.

In this manner, the packaging material of the present invention is provided with shading properties and opacifying properties required for a packaging material by adding a colorant to the adhesive layer 20. The number of layers can be reduced as compared with the case in which a colored resin layer or ink printing layer is separately formed in a laminate in order to provide a packaging material with these properties, and simplification of the production steps and reductionintheproductpricecanbeachieved. Further, the adhesive strength is substantially not adversely affected by addition of a colorant to the adhesive layer 20 as illustrated in examples described later, so that the packaging material can be suitably used.

Since the packaging material in the first embodiment shown in Fig. 1 has a minimum configuration having the adhesive layer 20 colored in this manner, the material is a thin and inexpensive packaging material provided with shading properties and opacifying properties.

The configuration, types, and the like of the layers in the packaging material of the present invention is not specifically limited, insofar as the packaging material has at least three layers, specifically, the substrate film layer 10, the colored adhesive layer 20, and the sealant layer 30 laminated on the substrate film layer 10 via the colored adhesive layer 20. There are various possible embodiments of the packaging material. Examples of the various embodiments include, in addition to such a minimum configuration of three layers shown in Fig. 1, a configuration shown in Fig. 2 having a white coating layer 40 between the substrate film 10 and the sealant layer 30, a configuration shown in Fig. 3 having a deposited film layer 50 between the substrate film 10 and the sealant layer 30, a configuration shown in Fig. 4 having both the white coating layer 40 and the deposited film layer 50 between the substrate film 10 and the sealant layer 30, and a configuration shown in Fig. 5 further having an intermediate layer 60 for providing the packaging material with gas barrier properties, rigidity, strength, and the like.

Obviously, the configuration is not limited to these embodiments illustrated in the figures. In Figs. 3 to 5, the reference numeral 22 denotes an uncolored adhesive layer. For example, a plurality of the colored adhesive layers can be formed in the packaging material of the present invention as in an embodiment in which the colored adhesive layer 20 is formed instead of the uncolored adhesive layer 22 in the embodiments shown in Figs. 3 to 5.

In the second embodiment shown in Fig. 2, the white coating layer 40, colored adhesive layer 20, and sealant layer 30 are laminated on one surface of the substrate film 10 in this order.

In the second embodiment, since the packaging material is provided with shading properties and opacifying properties by superimposing the white coating layer 40 on the colored adhesive layer 20, it is not necessary for the colored adhesive layer 20 to contain an extremely large amount of a colorant, and the color of the colorant needs not be limited to a dark color which makes the product grave-colored. Therefore, a product with an excellent design can be produced. In addition, since the white coating layer 40 needs not function as the only layer exhibiting shading properties and opacifying properties required for a packaging material, the amount and the number of times of application can be reduced, whereby the number of production steps and the cost can be reduced.

Next, in the third embodiment shown in Fig. 3, the colored adhesive layer 20, deposited film layer 50, uncolored adhesive layer 22, and sealant layer 30 are laminated on one surface of the substrate film 10 in this order.

In the third embodiment, since the packaging material is provided with shading properties and opacifying properties by superimposing the transparent deposited film layer 50 on the colored adhesive layer 20, it is not necessary for the colored adhesive layer 20 to contain an extremely large amount of a colorant, and insufficient shading properties and opacifying properties exhibited by the deposited film layer 50 can be reinforced to make these properties excellent.

In the fourth embodiment shown in Fig. 4, the white coating layer 40, colored adhesive layer 20, deposited film layer 50, uncolored adhesive layer 22, and sealant layer 30 are laminated on one surface of the substrate film 10 in this order.

In the fourth embodiment, since the packaging material is provided with shading properties and opacifying properties by superimposing the white coating layer 40 and deposited film layer 50 on the colored adhesive layer 20, it is not necessary for the colored adhesive layer 20 to contain an extremely large amount of a colorant, and insufficient shading properties and opacifying properties exhibited by the white coating layer 40 and deposited film layer 50 can be reinforced to make these properties excellent.

In the fifth embodiment shown in Fig. 5, the white coating layer 40, colored adhesive layer 20, deposited film layer 50, uncolored adhesive layer 22, intermediate layer 60, uncolored adhesive layer 22, and sealant layer 30 are laminated on one surface of the substrate film 10 in this order.

In the fifth embodiment as in the fourth embodiment, since the packaging material is provided with shading properties and opacifying properties by superimposing the white coating layer 40 and deposited film layer 50 on the colored adhesive layer 20, it is not necessary for the colored adhesive layer 20 to contain an extremely large amount of a colorant, and insufficient shading properties and opacifying properties exhibited by the white coating layer 40 and deposited film layer 50 can be reinforced to make these properties excellent. Further, other properties such as gas barrier properties, burst resistance, shock resistance, heat resistance, and puncture resistance can be improved by forming the intermediate layer 60.

In the above embodiments, all layers are joined using an adhesive or colored adhesive. However, in the present invention, there are no limitations to the joining of the layers, insofar as at least one colored adhesive layer is formed. Examples include various embodiments using coextrusion, low-temperature heat sealing, and the like.

The substrate film 10 in the packaging material of the present invention is not specifically limited. Examples of such a film that can be used include biaxially oriented or cast polyolefin films such as a polyethylene film, polypropylene film, and ethylene-propylene copolymer film; thermoplastic polyester films such as a polyethylene terephthalate (PET) film; biaxially oriented or cast polyamide films such as a nylon 6 film, nylon 6,6 film, nylon 6,10 film, aromatic nylon film, and amorphous nylon film; various other synthetic, semisynthetic, or natural polymer films; and films of a mixture of two or more such polymers. Further, deposited films described later can also be used as the substrate film. Of these, a biaxially oriented polypropylene film, biaxially oriented polyester film, and biaxially oriented polyamide film are generally used. In particular, when the packaging material of the present invention is used for a retort pouch, a biaxially oriented polyethylene terephthalate film (polyester film) is preferable as the substrate film 10.

Although not shown in the above-described embodiments, one or more of various layers such as a protective layer and printing layer may be formed on the other surface of the protective film 10, for example. In addition, any surface of the substrate film 10 can be subjected to various types of surface treatment such as plasma treatment and corona treatment, for example.

The thickness of the substrate film 10 is not specifically limited because the thickness depends on the intended use, laminate configuration, and the like of the packaging material, but is typically about 9 to 40 µm, for example.

Typically, the white coating layer 40 is formed directly on the substrate film 10. However, such a white coating layer 40 may be formed in another position of the laminate. The white coating layer 40 needs not necessarily be formed in the laminate of the packaging material of the present invention. However, in order to provide the packaging material with high shading properties and opacifying properties, the white coating layer is preferably formed. Although there are no specific limitations to the white coating layer 40, the white coating layer is preferably formed by applying the white coating layer made of titanium white, zinc oxide, zinc sulfide, calcium carbonate, or the like in an amount of about 3 to 20 g/m², and particularly preferably about 8 to 15 g/m² using printing. Such an amount of application can control the number of times of application using printing to about one to three. Accordingly, the number of times and amount of application deemed to be required for providing a packaging material having a conventional laminate configuration in which a colored adhesive layer is not formed with sufficient shading properties and opacifying properties can be reduced, whereby the cost and number of steps can be reduced.

Further, in the packaging material of the present invention, the colored adhesive layer 20 is formed. When the above-described white coating layer 40 is formed, the colored adhesive layer 20 in the laminate as the packaging material is particularly preferably located directly in contact with the white coating layer 40. This is because, when the white coating layer 40 formed in the laminate is attached to another film via a normal (uncolored) adhesive layer, shading properties rather decrease as compared with the case in which only the white coating layer 40 is formed on the substrate film 10, although the specific reasons are not clear, and, in order to prevent this phenomenon effectively, the adhesive layer formed directly on the white coating layer 40 is preferably colored. However, in the packaging material of the present invention, the position in which such a colored adhesive layer 20 is formed is not limited to the position directly in contact with the white coating layer 40, but may be another layer position. In addition, as described above, a plurality of the colored adhesive layers may be formed.

Although the adhesive as a base of the colored adhesive layer is not specifically limited, a one-component or two-component urethane or isocyanate adhesive for a dry laminate may be used, for example. In addition, an acrylic adhesive, polyester adhesive, epoxy adhesive, polyvinyl acetate adhesive, cellulose adhesive, and the like may be used.

Although various pigments and dyes can be used as a colorant added to such an adhesive, pigments are preferable from the viewpoint of opacifying properties and shading properties. Specific examples of the colorant include black colorants such as carbon black, furnace black, and acetylene black; brown colorants such as iron oxide, amber, and permanent brown; red colorants such as red iron oxide, rose iron oxide, antimony powder, permanent red, fire red, brilliant carmine, lightfast red toner, permanent carmine, pyrazolone red, bordeaux, heliobordeaux, rhodamine lake, DuPontoil red, thioindigo red, thioindigo maroon, and watching red strontium; white colorants such as titanium white, zinc oxide, zinc sulfide, and calcium carbonate; yellow colorants such as chrome yellow, cadmium yellow, yellow iron oxide, titanium yellow, chromium yellow, naphthol yellow, Hanza yellow, pigment yellow, benzidine yellow, permanent yellow, quinoline yellow lake, and anthrapyrimidine yellow; orange colorants such as permanent orange, molybdenum orange, vulcanfast orange, benzine orange, and indanthrene brilliant orange; purple colorants such as cobalt purple, fast violet, dioxane violet, and methyl violet lake; blue colorants such as methylene blue, aniline blue, cobalt blue, cerulean blue, calco oil blue, non-metal phthalocyanine blue, phthalocyanine blue, ultramarine blue, indanthrene blue, and indigo; and green colorants such as chrome green, cobalt green, pigment green B, green gold, phthalocyanine green, malachite green oxalate, and polychrome bromocopper phthalocyanine. These colorants may be used singly or in a combination of two or more. However, the colorant is not limited to these examples, obviously.

Although the amount of the colorant added to the adhesive depends more or less on the types of the base adhesive and the colorant to be added, the amount is, for example, preferably 1 to 15 parts by weight, and more preferably 4 to 10 parts by weight, with respect to 100 parts by weight of the base adhesive. When the amount of the colorant added is within this range, the effect on shading properties and opacifying properties by addition of the colorant can be sufficiently exhibited, and the adhesion strength is substantially not reduced by addition of the colorant.

As the uncolored adhesive layer 22, the above-described normal adhesive for a dry laminate (DL) can be used as is.

The deposited film layer 50 is disposed in the laminate in order to provide the packaging material with gas barrier properties, opacifying properties, and the like. Such a deposited film layer 50 needs not necessarily be formed in the laminate of the packaging material of the present invention. Examples of the deposited film layer 50 that can be used include deposited films in which a thin film of metal oxide such as aluminum oxide, silicon oxide, titanium oxide, zinc oxide, indium oxide, zirconium oxide, or magnesium oxide is formed on a polyethylene terephthalate film, cast or biaxially oriented polyamide film, cast or biaxially oriented polypropylene film, cast or biaxially oriented polyethylene film, ethylene-vinyl acetate alcohol copolymer film, or ethylene vinyl-acetate copolymer film by physical deposition such as vacuum deposition or sputtering or chemical deposition such as CVD. Of these, an aluminum oxide-deposited polyethylene terephthalate film, aluminum oxide-deposited nylon film, and the like are preferably used. The thickness of the metal oxide thin film in the deposited film layer 50 is not specifically limited, and depends on the type of the metal or metal oxide. However, in order to provide the packaging material with excellent properties such as gas barrier properties and opacifying properties, the thickness is preferably about 0.03 to 0.10 µm, in general.

Further, in the packaging material of the present invention, as shown in Fig. 5, the intermediate layer 60 may be separately formed, as required. The intermediate layer can be appropriately selected for use from various resins, in accordance with properties such as gas barrier properties, shock resistance, mechanical strength, and heat resistance with which the packaging material should be provided by forming the intermediate layer. Examples of such an intermediate layer that can be used include biaxially oriented or cast polyolefin films such as a polyethylene film, polypropylene film, and ethylene-propylene copolymer film; thermoplastic polyester films such as a polyethylene terephthalate film; biaxially oriented or cast polyamide films such as a nylon 6 film, nylon 6,6 film, nylon 6,10 film, aromatic nylon film, and amorphous nylon film; various other synthetic, semisynthetic, or natural polymer films such as a polyvinylidene chloride film, ionomer film, and polyurethane film; and films of a mixture of two or more such polymers.

There are no specific limitations to the sealant layer in the packaging material of the present invention, insofar as the two sealant layers disposed as the inner surface can be sealed with heat in a step of bag making. For example, a cast polyolefin film such as a polyethylene film, polypropylene film, or ethylene-propylene copolymer film, or an ethylene-vinyl acetate copolymer film, or the like can be used. Of these, when a retort pouch is produced using the packaging material of the present invention, for example, a polypropylene film, in particular, a cast polypropylene film (CPP) is preferably used from the viewpoint of food safety, oil resistance, and the like with regard to the content.

The specific combination in the laminate configuration in the packaging material of the present invention is not specifically limited. Some examples of such a configuration include PET / white coating layer / colored DL / aluminum oxide-deposited PET* / DL / biaxially oriented nylon (ONy) / DL / CPP, PET /white coating layer / colored DL / CPP, and aluminum oxide-deposited PET* / white coating layer / colored DL / ONy / DL / CPP. In the above laminate configuration examples, the "aluminum oxide-deposited PET" layer preferably has a deposited surface on the side with a symbol "*".

The packaging material of the present invention, formed as a bag by an appropriate method such as two-side sealing, three-side sealing, four-side sealing, pillow pouch forming, gazette pouch forming, or standing pouch forming, can be suitably used as a packaging container for retort pouch foods represented by cooked general foods, baby foods, and the like; drinks such as juices and soft drinks; fat-containing foods such as snacks and chocolates; household detergents and toiletries such as household liquid detergents, household softeners, shampoos, and conditioners; pharmaceutical productssuch as various pharmaceutical solutions and pharmaceutical agents; etc.

### Examples

Next, the packaging material of the present invention will be described in more detail with reference to examples. However, the present invention should not be limited to the examples illustrated below.

### Examples 1 to 20

One surface of a 12 µm-thick polyethylene terephthalate film as a substrate was printed with white ink (New LP Super, manufactured by Toyo Ink Mfg. Co., Ltd.) once to four times as shown in Tables 1 to 4 using gravure printing to form a white coating layer with the white ink applied in an amount of 4.2 g/m², 9.0 g/m², 13.2 g/m², or 18.0 g/m². Then, a 12 µm-thick transparent deposited polyethylene terephthalate film was laminated on the surface with the white coating layer of the biaxially oriented polyethylene terephthalate film, in which the white coating layer was formed, by dry lamination using an urethane adhesive (TM-265, manufactured by Toyo-Morton, Ltd.) containing a colorant having various compositions shown in Tables 1 to 4. Next, a 12 µm-thick biaxially oriented nylon film was laminated on the aluminum oxide-deposited polyethylene terephthalate film, and a 70 µm-thick cast polypropylene film was further laminated on the nylon film by dry lamination using the same urethane adhesive without a colorant to produce a packaging material.

The light transmittance, opacifying properties, laminate adhesion strength, and heat seal strength of the resulting packaging material were examined according to the following method and standards. The results obtained are shown in Tables 1 to 4.

### Comparative Examples 1 to 3

A packaging material was produced in the same manner as in Examples 1, 6, and 11, except for using the urethane adhesive without a colorant instead of the urethane adhesive containing a colorant in Examples 1, 6, and 11. The light transmittance, opacifying properties, laminate adhesion strength, and heat seal strength of the resulting packaging material were examined according to the following method and standards. The results obtained are shown in Tables 1 to 4.

### Reference Examples 1 to 4

As a reference, one surface of a 12 µm-thick polyethylene terephthalate film, the same substrate as used in Examples 1 to 20, was printed with white ink once to four times in the same manner as in Examples 1 to 20 to form a white coating layer with the white ink applied in an amount of 4.2 g/m², 9.0 g/m², 13.2 g/m², or 18.0 g/m². The light transmittance, opacifying properties, laminate adhesion strength, and heat seal strength of the sample used as is were examined according to the following method and standards. The results obtained are shown in Tables 1 to 4.

### Reference Example 5

As a reference, one surface of a 12 µm-thick polyethylene terephthalate film, the same substrate as used in Examples 1 to 20, was printed with white ink three times in the same manner as in Examples 1 to 20 to form a white coating layer with the white ink applied in an amount of 13.2 g/m². Further, the upper surface of the white coating layer was printed with mixed ink containing 94 mass% of white ink, 3 mass% of black ink, and 3 mass% of brown ink by gravure printing to form a colored coating layer with the mixed ink applied in an amount of 4.8 g/m². The light transmittance, opacifying properties, laminate adhesion strength, and heat seal strength of the sample used as is were examined according to the following method and standards. The results obtained are shown in Tables 3 and 4.

### Comparative Example 4

A transparent deposited polyethylene terephthalate film, biaxially oriented nylon film, and cast polypropylene film were sequentially laminated on the upper surface of the colored coating layer in the laminate obtained in Reference Example 5, by dry lamination using the urethane adhesive without a colorant in the same manner as in Comparative Examples 1 to 3, to produce a packaging material.

The light transmittance, opacifying properties, laminate adhesion strength, and heat seal strength were examined according to the following method and standards. The results obtained are shown in Tables 3 and 4.

### Characteristic evaluation

### <Light transmittance>

Light at prescribed wavelengths of 600 nm, 700 nm, 800 nm, and 900 nm was applied to the side of the substrate on which the white coating layer was not formed. The transmittance was examined using an ultraviolet-visible spectrophotometer (manufactured by JASCO Corp.).

### <Opacifying properties>

The resulting sample of the packaging material was placed on a board colored with black, indigo, purple, red, and yellow in this order so that the side of the substrate, on which the white coating layer was not formed, constituted the surface. Opacifying properties were evaluated by confirming using visual observation whether or not the colors of the colored board were discernible. The evaluation standards were as follows.
×: The colors of the colored board were transparently discernible.
Δ: The colors of the colored board were a little discernible.
○: The colors of the colored board were discernible only with difficulty.
ⓞ: The colors of the colored board were almost not discernible.

### <Laminate adhesion strength>

Two laminates of the resulting packaging material were superimposed so that the cast polypropylene films formed the inside, and three peripheral sides were heat-sealed (conditions: 220°C, two seconds) to prepare a package with a capacity of about 50 ml. Pseudo-food as a 1:1:1 (volume ratio) mixture of vinegar, oil, and ketchup was enclosed in the package as the content, and the opening was heat-sealed under the same conditions as above. The package with the pseudo-food enclosed was retort-treated at 120°C for 30 minutes.

Laminate adhesion strength (between the substrate PET and the deposited PET) in the packaging material before and after the retort treatment was determined using Strograph M1 (manufactured by Toyo Seiki Seisaku-sho, Ltd.).

### <Heat seal strength>

A package with pseudo-food enclosed the same as in the case of determination of laminate adhesion strength as described above was prepared. Heat seal strength (between the cast polypropylene films) before and after the retort treatment (120°C, 30 minutes) was determined using Strograph M1 (manufactured by Toyo Seiki Seisaku-sho, Ltd.).

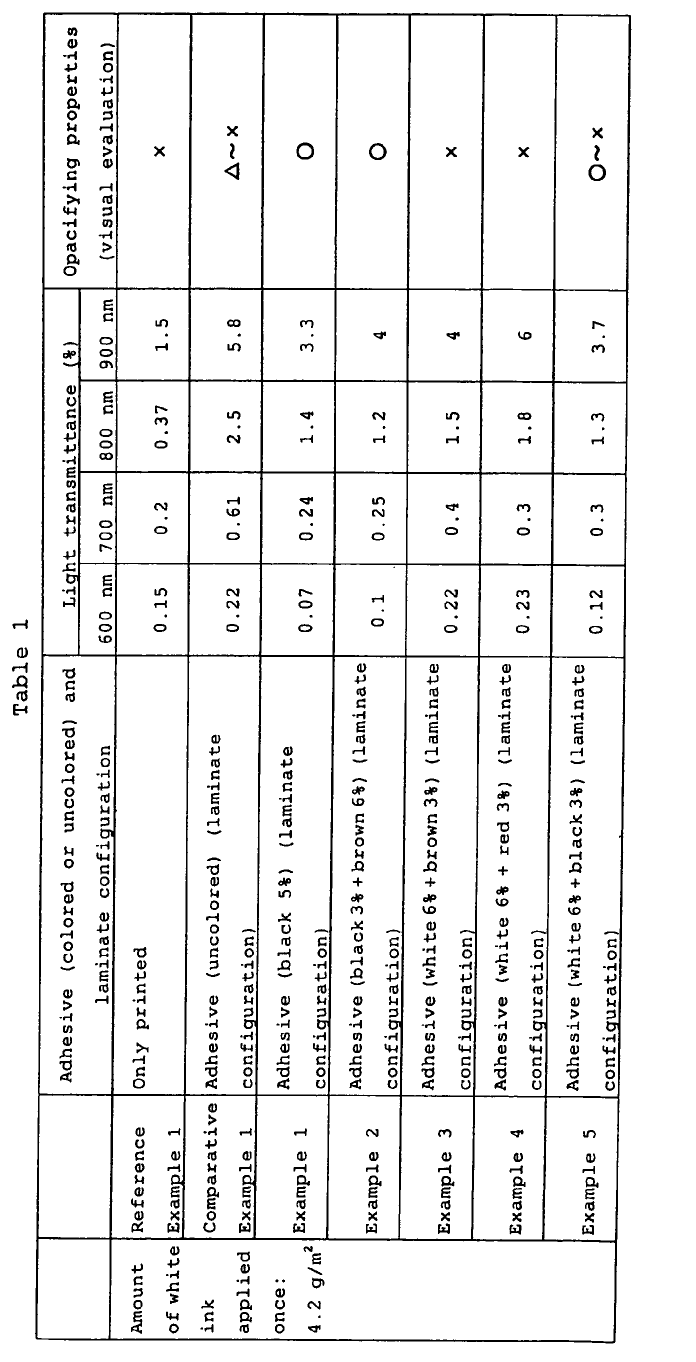

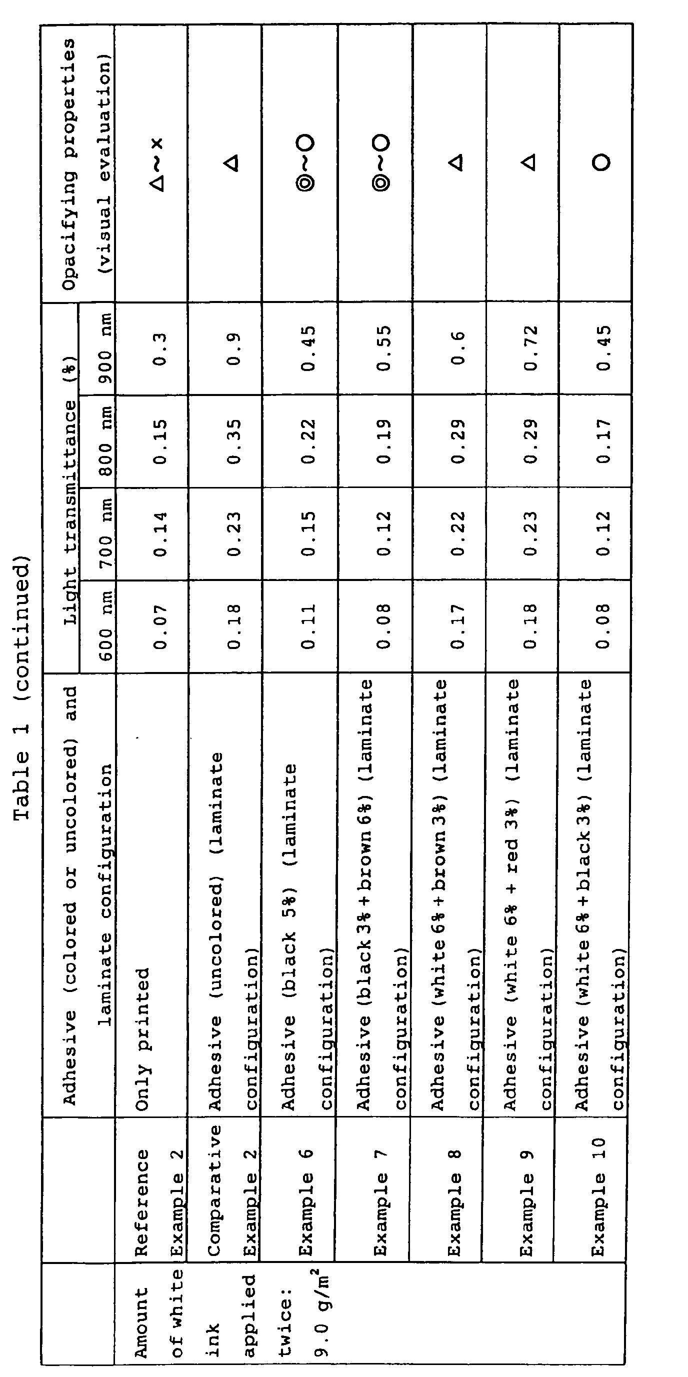

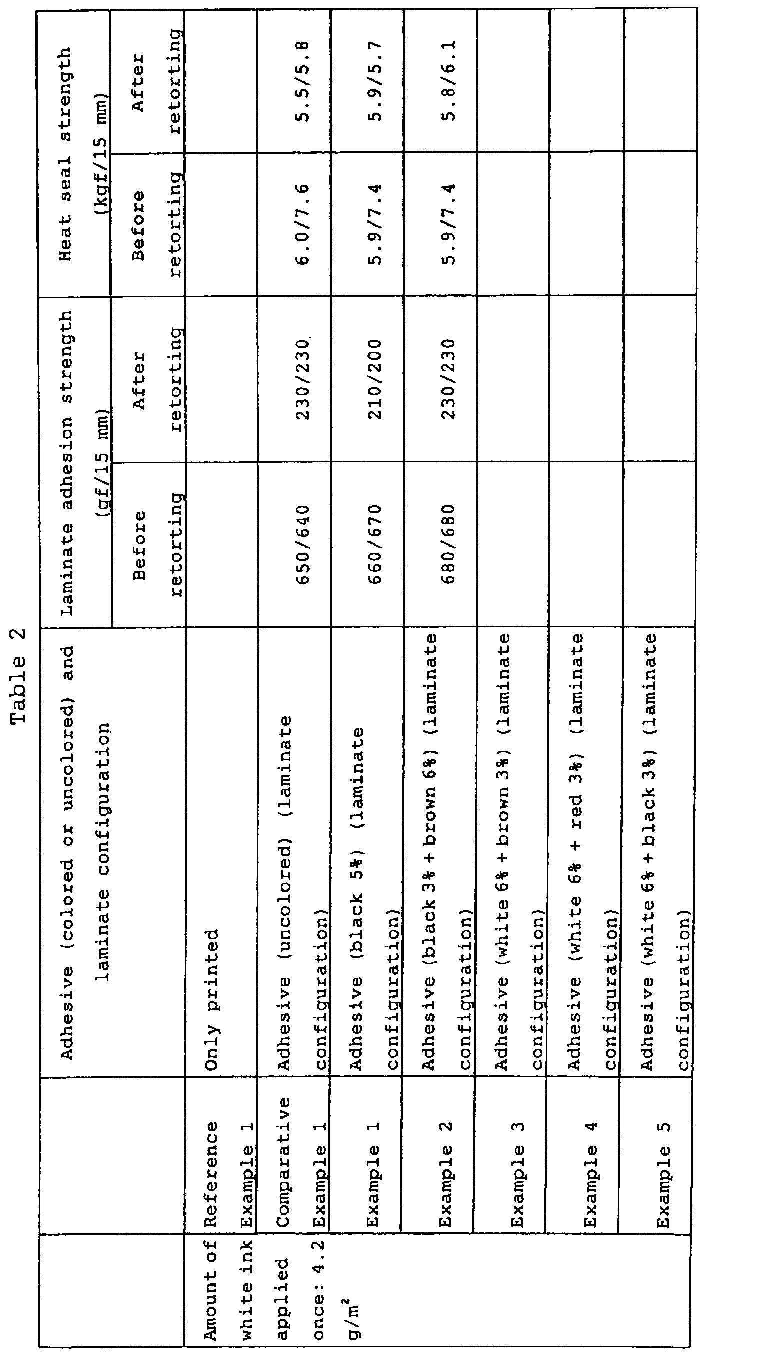

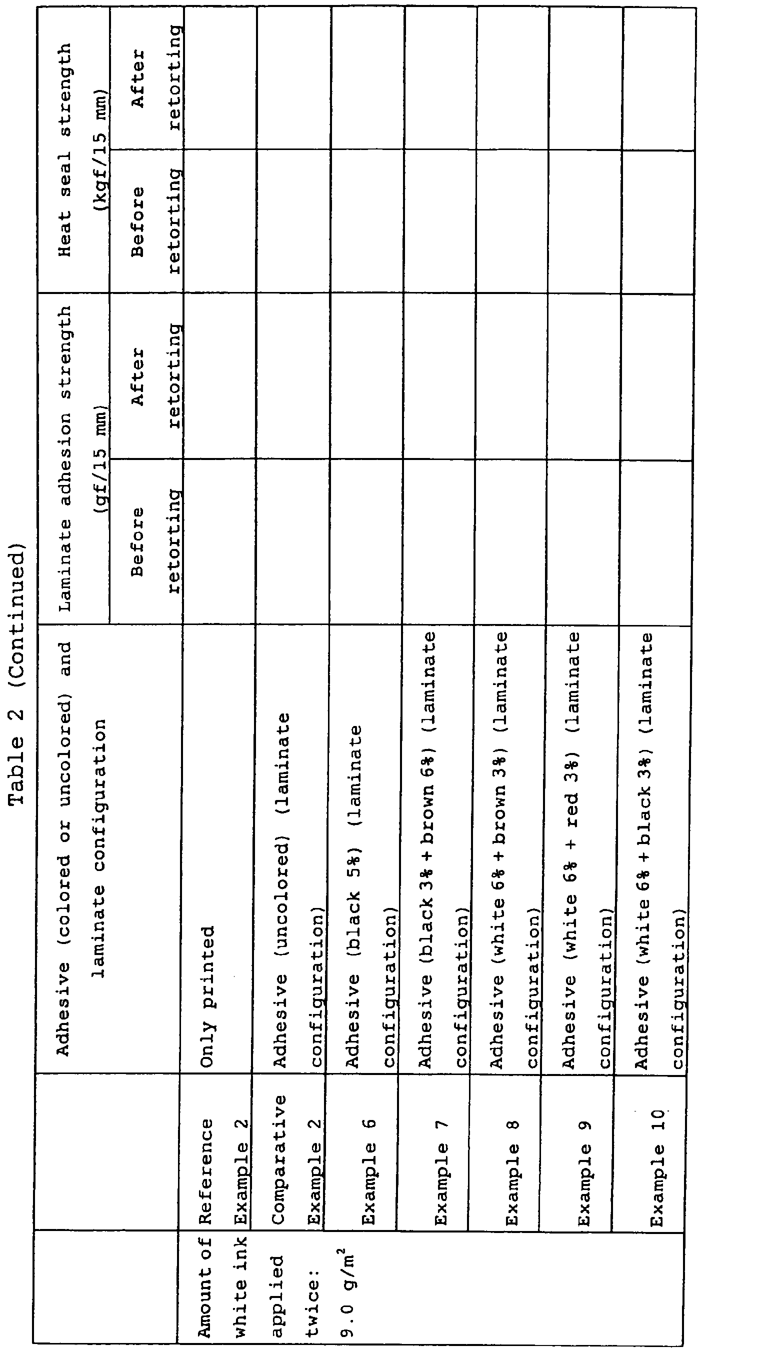

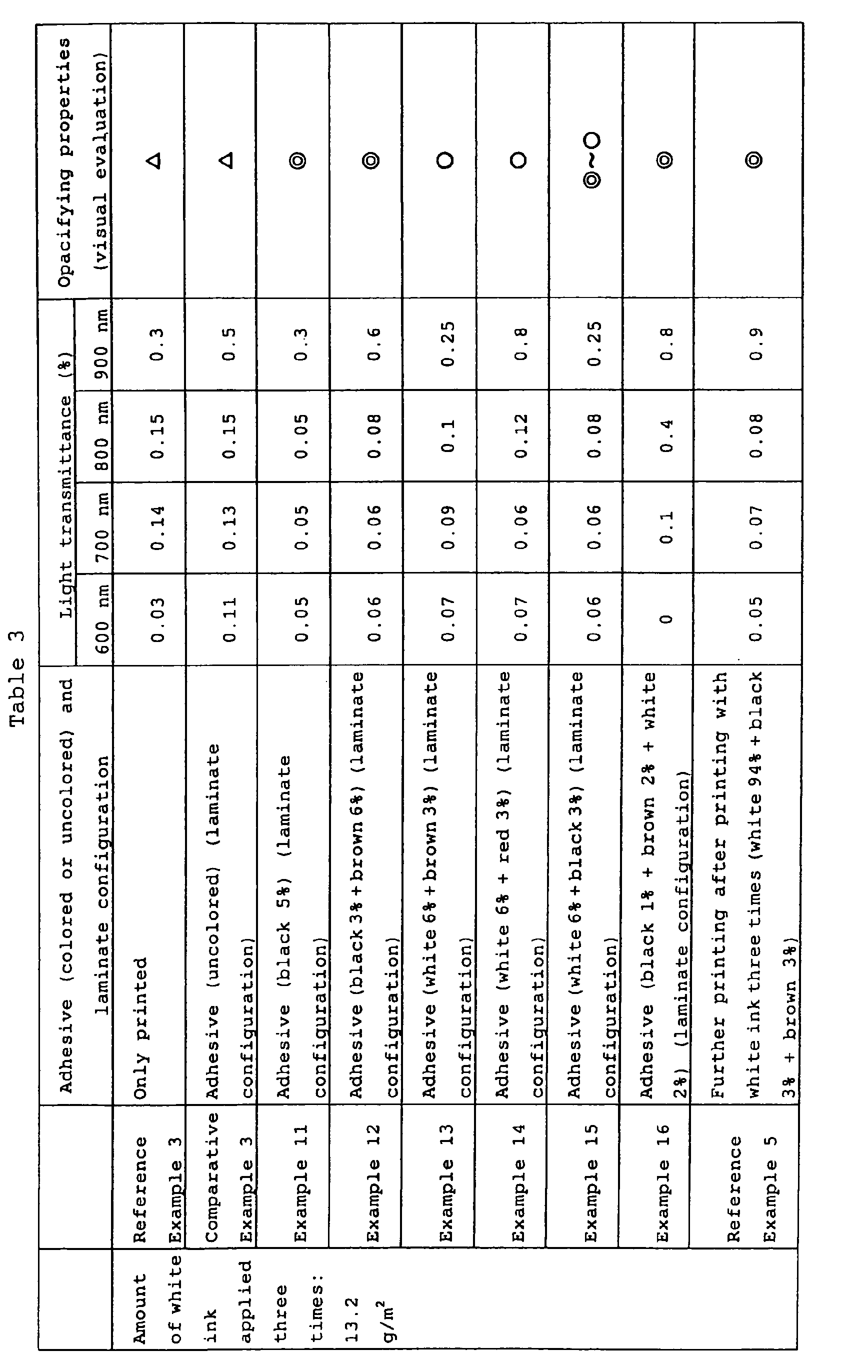

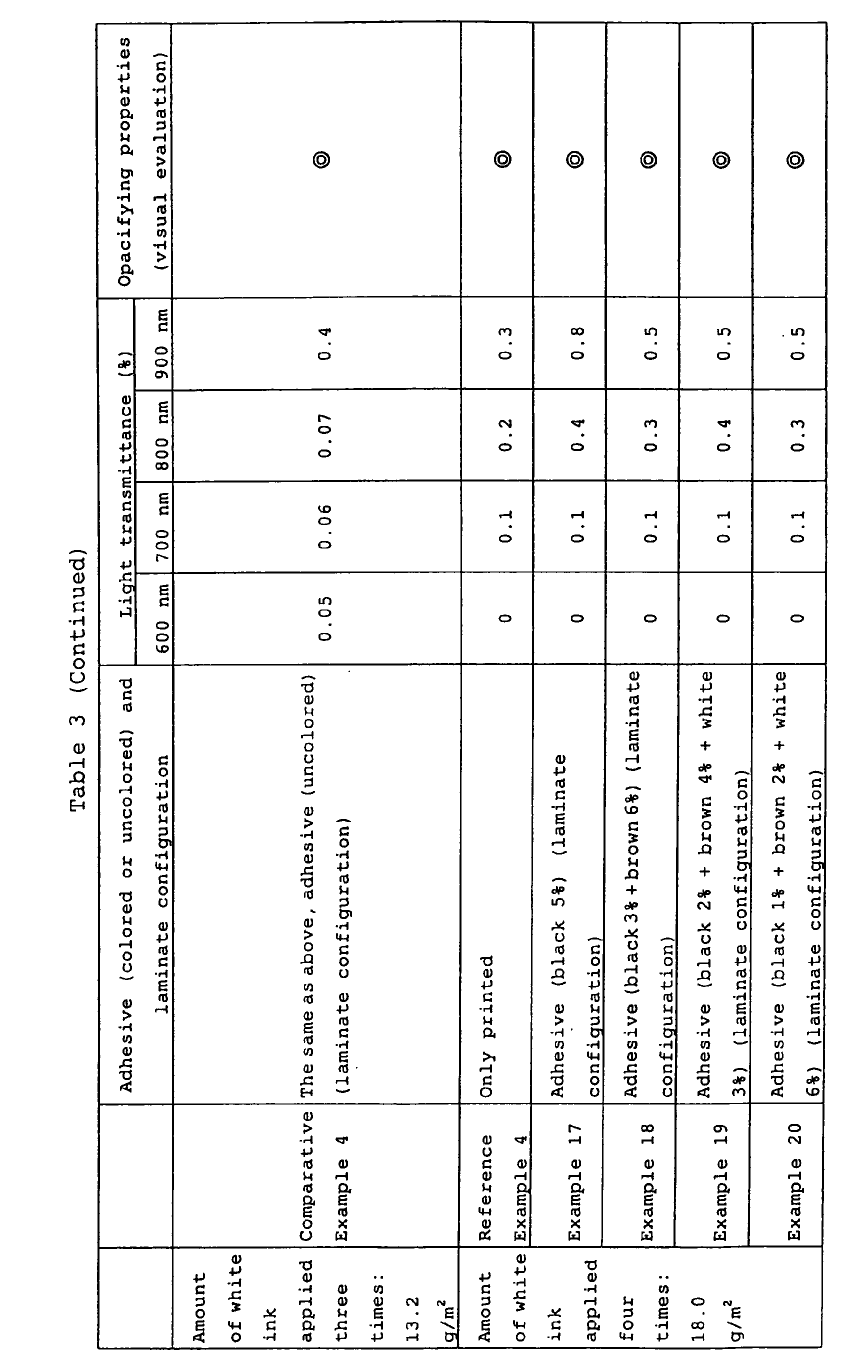

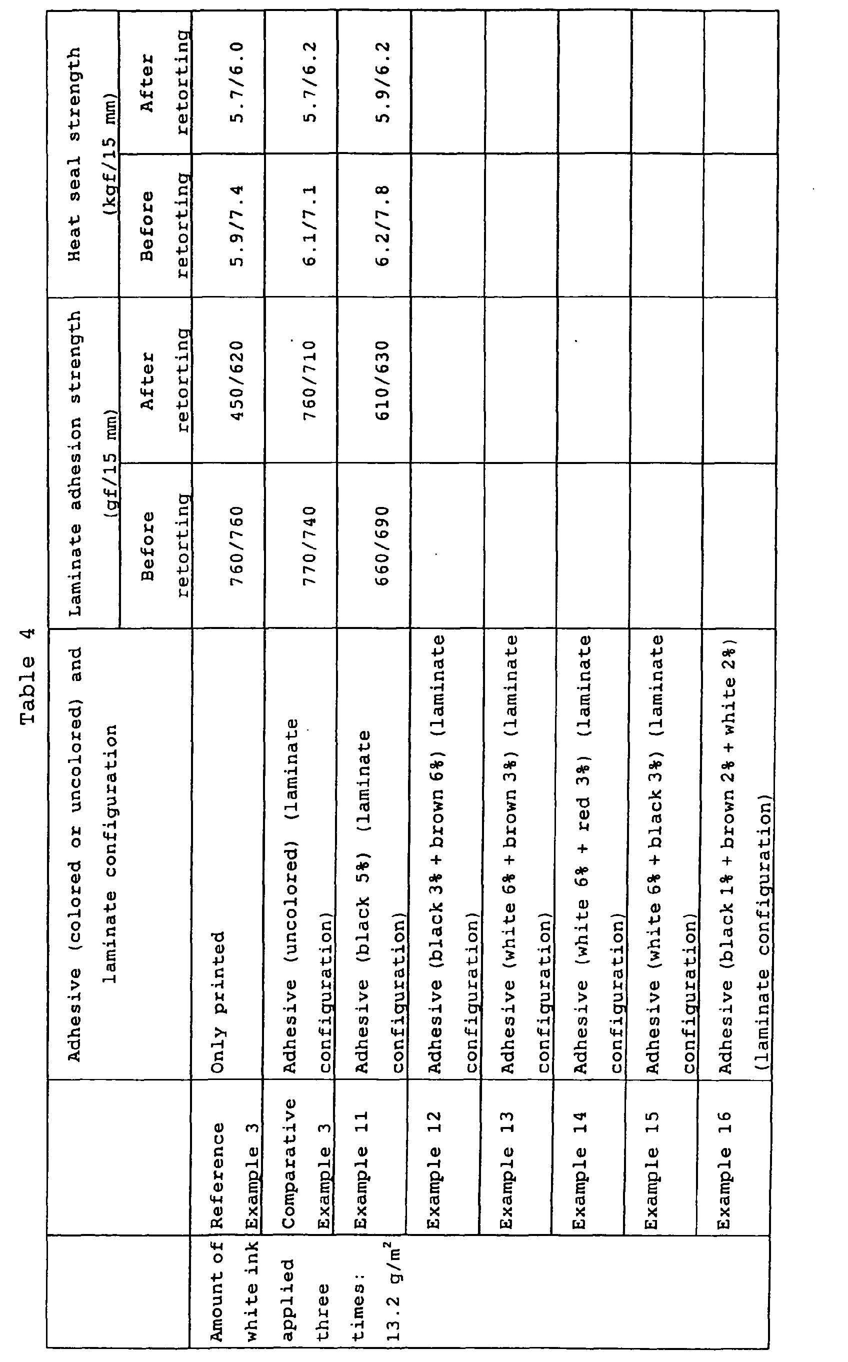

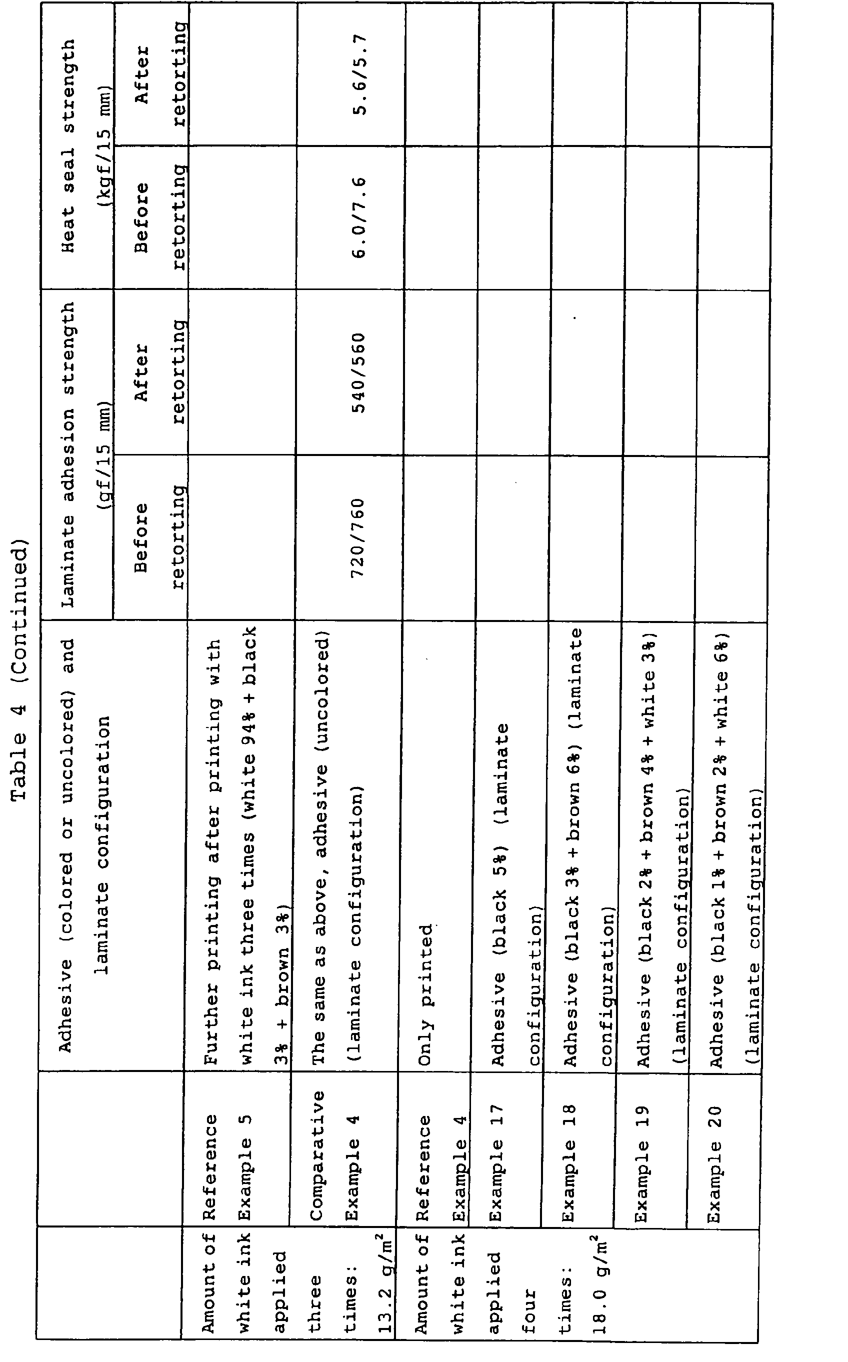

As shown in Tables 1 to 4, the packaging material of the present invention in Examples exhibits sufficient shading properties even when the number of times of printing in the formation of the white coating layer is small and the material is relatively thin. In particular, it is found that a packaging material having a light transmittance at each wavelength of less than 1% and exhibiting excellent opacifying properties, which is obtained only by repeating four or more times of printing when a ink coating layer is formed, can be achieved by a combination of printing with white ink twice or three times and using the colored adhesive layer, whereby the production cost and the number of production steps can be reduced. In addition, laminate adhesive strength and heat seal strength comparable to the case of using an uncolored adhesive can be obtained.

## Claims

1. A packaging material comprising a laminate having at least a sealant layer laminated on a substrate film layer via an adhesive layer, being **characterized in that** the adhesive layer contains a colorant.

2. The packaging material according to claim 1, wherein the laminate further comprises a white coating layer between the substrate film and the sealant layer.

3. The packaging material according to claim 2, wherein the adhesive layer containing a colorant is formed in contact with the white coating layer.

4. The packaging material according to any one of claims 1 to 3, wherein the laminate further comprises a deposited layer between the substrate film and the sealant layer.

5. The packaging material according to any one of claims 1 to 4, wherein the laminate further comprises an intermediate layer between the substrate film and the sealant layer.

6. The packaging material according to any one of claims 2 to 5, wherein the white coating layer has a weight of 8 to 15 g/m².

7. The packaging material according to any one of claims 3 to 6, wherein the deposited layer is an aluminum oxide-deposited or silicon oxide-deposited plastic film.

8. The packaging material according to any one of claims 3 to 6, wherein the deposited layer is an aluminum oxide-deposited or silicon oxide-deposited polyethylene terephthalate film.

9. The packaging material according to any one of claims 1 to 8, wherein the laminate comprises a white coating layer, the adhesive layer containing a colorant, a deposited layer composed of an aluminum-deposited polyethylene terephthalate film, an adhesive layer, a intermediate layer composed of oriented polyamide film, an adhesive layer, and the sealant layer composed of a cast polypropylene film, which are laminated on the substrate film layer composed of polyethylene terephthalate in this order.
